# NEUE EUROPÄISCHE PATENTSCHRIFT

(11) **EP 2 812 387 B2**
(45) Veröffentlichungstag und Bekanntmachung des Hinweises auf die Entscheidung über den Einspruch: **06.03.2019**
(45) Hinweis auf die Patenterteilung: 04.05.2016
(21) Anmeldenummer: 13701492.4
(22) Anmeldetag: 30.01.2013
(51) Int. Cl.: C08K 3/10, C09J 101/10, C09J 165/00, C08L 101/10, C09J 11/04, C09J 171/02, C09J 175/04, C09J 201/10, B32B 27/12, C08G 18/83, C08G 65/48, C08K 5/544, C08G 18/48, C08G 18/71, C08K 3/36, C08K 5/00, C08G 65/336, C09J 5/00, B32B 37/12, C08K 5/06

(54) **MASSEN AUF BASIS VON ORGANYLOXYSILANTERMINIERTEN POLYMEREN**
COMPOSITIONS ON THE BASIS OF ORGANYLOXYSILANE-TERMINATED POLYMERS
MATIÈRES À BASE DE POLYMÈRES À TERMINAISON ORGANYLOXYSILANE

(30) Priorität: 06.02.2012 DE 102012201734
(43) Veröffentlichungstag der Anmeldung: 17.12.2014
(73) Patentinhaber: Wacker Chemie AG, 81737 München (DE)
(72) Erfinder: STANJEK, Volker, 84539 Ampfing (DE); PRASSE, Marko, 01612 Glaubitz (DE); ZANDER, Lars, 84503 Altötting (DE)
(74) Vertreter: Budczinski, Angelika
(86) Internationale Anmeldenummer: PCT/EP2013/051779
(87) Internationale Veröffentlichungsnummer: WO 2013/117471

(56) Entgegenhaltungen:
- EP-A1- 2 172 525
- WO-A1-99/31178
- WO-A1-03/068886
- WO-A1-2005/108515
- WO-A1-2007/054300
- WO-A1-2007/085604
- WO-A1-2007/085605
- WO-A1-2007/085620
- WO-A1-2010/004038
- WO-A1-2011/051056
- WO-A1-2013/117471
- WO-A2-2008/027499
- WO-A2-2008/153687
- WO-A2-2009/065950
- DE-A1-102005 054 008
- DE-A1-102010 034 998
- US-A1- 2010 154 991
- "Silikonöle-hitzebeständig,schmierend, emulgierend", Silikonöle Chemie und ihre Didaktik, Universität Wuppertal , 25. Juni 2013 (2013-06-25), XP002699512, Gefunden im Internet: URL:http://www.chemiedidaktik.uni-wupperta l.de/alte_seite_du/material/silicon/strukt ur/silioele.htm [gefunden am 2013-06-25]
- Produktdatenblatt Socal® U1S2, 17 November 2008 (2008-11-17),
- Produktdatenblatt Cab-O-Sil® M-5, April 2004 (2004-04),
- Broschüre Ram Charan Company - Fumed Silica, January 2012 (2012-01),
- Produktdatenblatt Aerosil® OX 50, August 2013 (2013-08),
- Produktdatenblatt Aerosil® R 972,
- Produktdatenblatt Aerosil® R 8200,
- Internetveröffentlichung: Evonik Resource Efficiency GmbH 'Aerosil® OX 50' vom 25022016
- Internetveröffentlichung Momentive Performance Materials Inc. 'Silquest A-2120' vom 10092011
- Schematische Darstellung der in WO2007/054300 A beschriebenen Prepolymersynthese.
- GYSAU, D.: "Füllstoffe, 2. überarbeitete Auflage", , 2006, page 129,
- Produktbeschreibung Hi-Sil
- Produktbeschreibung Zeosil®
- neues Vergleichsbeispiel

## Beschreibung

Die Erfindung betrifft Massen auf der Basis von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Der entscheidende Vorteil von einkomponentigen Systemen ist vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL® STP-E10 oder- E30 der Fa. Wacker-Chemie AG.

Nachteilig an den meisten gängigen silanvernetzenden Systemen ist jedoch die Tatsache, dass zwar moderate Reißfestigkeiten erreichbar sind, die typischerweise in einer Größenordnung von 1-4 MPa liegen, Reißfestigkeiten >5 MPa aber nicht oder nur mit sehr großen Einschränkungen erreichbar sind. Eben solche höheren Reißfestigkeiten werden aber für zahlreiche Anwendungen, z.B. für zahlreiche Montageklebstoffe, Hochleistungsklebstoffe für DIY-Anwendungen oder auch die Verklebung von Windschutzscheiben gefordert. Neben einer hohen Reißfestigkeit sollten die entsprechenden Klebstoffe jedoch auch noch hohe Elastizitäten, d.h. Bruchdehnungen >100% aufweisen.

Eine Möglichkeit, die Reißfestigkeit von silanvernetzenden Systemen zu steigern, stellt der Einbau von kurzkettigen Diolen in silanvernetzende Polyurethane dar, wie er in WO 05/000931 beschrieben ist. Doch auch mit dieser Maßnahme lassen sich nur Systeme mit moderat verbesserten Zugfestigkeiten erreichen.

Eine der wenigen Möglichkeiten, Reißfestigkeiten >5 MPa zu erreichen, stellt der Einsatz von Ruß als Füllstoff dar, wie z.B. in WO 02/090411 beschrieben. Die Verwendung von Ruß hat jedoch die massive Einschränkung, dass ausschließlich schwarz gefärbte Klebstoffe erhältlich sind. Dies ist für die jeweiligen Anwender nur in sehr wenigen Klebstoffanwendungen akzeptabel. Außerdem lassen sich auch mit den in WO 02/090411 beschriebenen rußhaltigen Formulierungen keine Zugfestigkeiten >6,5 MPa erreichen.

Eine weitere Möglichkeit, mit silanvernetzenden Systemen sehr hohe Reißfestigkeiten zu erreichen, ist in WO 2011/026658 beschrieben. Hier werden die hohen Reißfestigkeiten durch den Einsatz von silanterminierten Polyurethanen erreicht, die auf extrem kurzkettigen Polyolen mit Molmassen < 1000 g/mol basieren. Dies führt zum einen dazu, dass die resultierenden silanvernetzenden Polymere sowohl eine sehr hohe Dichte an zur Wasserstoffbrückenbildung befähigten Urethan- und/oder Harnstoffeinheiten als auch eine entsprechend hohe Zahl an vernetzbaren Silanendgruppen aufweisen. Derartige Systeme besitzen jedoch zwangsläufig drei systemimmanente Nachteile. Denn erstens erfordert die Herstellung von Prepolymeren mit einer höhen Konzentration an silanvernetzenden Gruppen entsprechend große Silanmengen. Diese stellen jedoch in der Regel die kostenintensivsten Prepolymerbestandteile dar, was die Rohstoffkosten für diese Produkte entsprechend steigen lässt. Zweitens führt die zur Erreichung hoher Reißfestigkeiten ebenfalls notwendige hohe Konzentration an Urethan- und/oder Harnstoffgruppen zu sehr hohen Prepolymerviskositäten. Entsprechend problematisch ist die Compoundierung dieser Prepolymere zu fertig formulierten Klebstoffen sowie auch die Anwendung dieser meist ebenfalls vergleichsweise hochviskosen Endprodukte. Schließlich führen die kurzen Kettenlängen und hohen Vernetzungsdichten der entsprechenden Polymere zu harten aber auch sehr unelastischen Materialien mit Bruchdehnungen weit unter 50%.

Neben diesen Eigenschaftsnachteilen besitzen die in WO 2011/026658 beschriebenen Polymertypen auch noch den Nachteil, nicht oder nur sehr eingeschränkt kommerziell verfügbar zu sein.

Eine dritte Möglichkeit, mit silanvernetzende Systemen sehr hohe Reißfestigkeiten zu erreichen, ist in EP 1 957 553 A beschrieben. Hier werden Klebstoffformulierungen beschrieben, die spezielle silanterminierte Polyurethane mit einer mittleren Kettenlänge von ca. 7000 g/mol. pyrogene Kieselsäure mit niedriger BET-Oberfläche und monomere Silane enthalten, wobei die pyrogene Kieselsäure in Mengen zwischen 7 und 20 Gew.-% und die monomeren Silane in Mengen >10 Gew.-% eingesetzt werden.

Nachteilig ist jedoch auch hier die vergleichsweise niedrige Reißdehnung der entsprechenden Klebstoffe. Zudem besitzen auch die in EP 1 957 553 A beschriebenen Systeme den Nachteil, ausschließlich auf kommerziell nicht verfügbaren silanvernetzenden Polymertypen zu beruhen.

In DE 2005 054 008 A1 werden silanvernetzende Kleb-, Dicht- und Beschichtungsstoffe beschrieben.

In WO 2005/108515 A1 werden Partikel enthaltende silanvernetzende Beschichtungsformulierungen beschrieben.

In US 2010/0154991 A1 werden vernetzbare Klebstoffbeschichtungen offenbart.

Gegenstand der Erfindung sind Massen (M) enthaltend
(A) silanvernetzende Polymere der Formel

   Y-[(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest, ausgewählt aus Polyurethanresten und Polyoxyalkylenresten, bedeutet,
   - R: gleich oder verschieden sein kann und einen einwertigen, gegebenenfalls substituierten Kohlenwasserstoffrest darstellt,
   - R¹: gleich oder verschieden sein kann Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann Wasserstoffatom oder einen einwertigen, gegebenenfalls substituierten Kohlenwasserstoffrest darstellt,
   - x: eine ganze Zahl von 1 bis 10 ist,
   - a: gleich oder verschieden sein kann und 0, 1 oder 2 ist und
   - b: gleich oder verschieden sein kann und eine ganze Zahl von 1 bis 10 ist,
(B) hochdisperse, pyrogene, hydrophobe Kieselsäure und
(D) basischen Stickstoff aufweisende Organosiliciumverbindung enthaltend Einheiten der Formel

   D_{c}Si(OR³)_{d}R⁴ₑO_{(4-c-d-e)/2} (V),

   worin
   - R³: gleich oder verschieden sein kann und Wasserstoffatom oder gegebenenfalls substituierte Kohlenwasserstoffreste bedeutet,
   - D: gleich oder verschieden sein kann und einen einwertigen, SiC-gebundenen Rest mit basischem Stickstoff bedeutet,
   - R⁴: gleich oder verschieden sein kann und einen einwertigen, gegebenenfalls substituierten SiC-gebundenen, von basischem Stickstoff freien organischen Rest bedeutet,
   - c: 0, 1, 2, 3 oder 4, bevorzugt 1, ist,
   - d: 0, 1, 2 oder 3, bevorzugt 1, 2 oder 3, besonders bevorzugt 2 oder 3, ist und
   - e: 0, 1, 2 oder 3, bevorzugt 1 oder 0, ist,
   mit der Maßgabe, dass die Summe aus c+d+e kleiner oder gleich 4 ist und pro Molekül mindestens ein Rest D anwesend ist,
   mit der Maßgabe, dass silanvernetzende Polymere (A) eine mittlere Molmasse Mₙ (Zahlenmittel) von mindestens 8000 g/mol und höchstens 30 000 g/mol aufweisen und dass die Masse (M) hochdisperse Kieselsäure in einer Menge von 16 bis 50 Gew.- %, bezogen auf das Gesamtgewicht der Masse (M), enthält, wobei es sich bei der hochdispersen Kieselsäure um hochdisperse, pyrogene, hydrophobe Kieselsäure handelt.

Die zahlenmittlere Molmasse Mₙ wurde bestimmt mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl.

Der Erfindung liegt die überraschende Entdeckung zugrunde, dass die erfindungsgemäßen Formulierungen es erlauben, die für die Erzielung von hohen Elastizitäten, d.h. Bruchdehnungen >100% benötigten langkettigen und damit entsprechend hochmolekularen silanvernetzenden Polymere einzusetzen, ohne dass deren Einsatz automatisch zu sehr mäßigen Reißfestigkeiten, d.h. zu Reißfestigkeiten unter 5 MPa, führt. Somit erlauben die erfindungsgemäßen Systeme die Entwicklung von Klebstoffen, die sowohl hochreißfest als auch hochelastisch sind.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Polyurethane; enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen - [(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handeltessich vorzugsweise um eine Gruppe-CH(COOR")-CH₂-COOR" oder einen gegebenenfalls substituierten Kohlenwasserstoffrest mit 1 bis 20 Kohlenstoffatomen, besonders bevorzugt um eine lineare, verzweigte odercyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)_{b}-Si-Rₐ(OR²)₃₋ₐ] an beliebigen Stellen im Polymer aufweisen, wie etwa kettenständig und/oder endständig.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen, wobei letztere bevorzugt sind.

Es handelt sich bei Rest Y in Formel (I) um Polyurethanreste und Polyoxyalkylenreste, insbesondere um Polyoxyalkylenreste.

Sofern Y für Polyurethanreste steht, handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und indices eine der o.g. Bedeutungen haben. Die Polyurethanreste Y sind dabei vorzugsweise aus linearen oder verzeigten Polyoxyalkylenen, insbesondere aus Polypropylenglycolen, und Di- oder Polyisocyanaten herstellbar. Die Reste Y weisen dabei vorzugsweise mittlere Molmassen Mₙ von 10 000 bis 30 000 g/mol. bevorzugt von 11 000 bis 20 000 g/mol auf. Geeignete Verfahren zur Herstellung einer entsprechenden Komponente (A) sowie auch Beispiele für die Komponente (A) selbst sind unter anderen in EP 1 093 482 B1 (Absätze [0014] - [0023], [0039] - [0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Sofern Y für Polyoxyalkylenreste steht, handelt es sich bevorzugt um lineare oder verzweigte Polyoxyalkylenreste, besonders bevorzugt um Polyoxypropylenreste, deren Kettenenden vorzugsweise über -O-C(=O)-NH- an die Gruppe bzw. Gruppen -[(CR¹₂)_{b}-SiRa(OR²)₃₋ₐ] gebunden sind. Die Polyoxyalkylenreste Y weisen vorzugsweise mittlere : Molmassen Mₙ von 10 000 bis 30 000 g/mol. bevorzugt von 11 000 bis 20 000 g/mol auf. Geeignete Verfahren zur Herstellung einer entsprechenden Komponente (A) sowie auch Beispiele für die Komponente (A) selbst sind in unter anderem in EP 1 535 940 B1 (Absätze [0005]-[0025] sowie Beispiele 1-3 und Vergleichsbeispiele 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (II)

und

-O-C(=O)-NH-(CR¹₂)_{b}-SiRₐ(OR²)₃₋ₐ (III),

wobei die Reste und Indizes eine der oben dafür angegebenen Bedeutungen haben.

Beiden Endgruppender erfindungsgemäß eingesetzten Verbindungen (A) handeltes sichbesonders bevorzugt um solche der Formel (III).

Bevorzugt handelt es sich bei Komponente (A) um silanterminierte Polyoxyalkylene, besonders bevorzugt um silanterminierte Polyoxypropylene, mit Endgruppen der Formel (III), wobei R¹ für Wasserstoffatom, R für Methylrest, R² für Methyl- oder Ethylrest, b für 1 oder 3 und a für 0 oder 1 steht. Die silanterminierten Polyoxyalkylene weisen dabei außer den Endgruppen (III) vorzugsweise ausschließlich Polyethereinheiten auf. Vorzugsweise besitzen die erfindungsgemäßen Polymere (A) pro Molekül 2 oder 3, besonders bevorzugt 2, Endgruppen der Formel (III).

Ein großer.Vorteil von silanterminierten Polyoxyalkylenen mit Endgruppen der Formel (III) gegenüber von silanterminierten Polyoxyalkylenen mit anderen Endgruppen stellt ihre einfache Herstellbarkeit durch eine Umsetzung von gängigen, mit Hydroxylgruppen terminierten Polyoxyalkylenen und Silanen der Formel

OCN-(CR¹₂)_{b}-SiRₐ(OR²)₃₋ₐ (IV)

dar, wobei alle Reste und Indizes eine der oben genannten Bedeutungen haben. Entscheidend ist dabei, dass durch diese Reaktion eine weitgehend vollständige Terminierung der vorhandenen Kettenenden gelingt, womit sich dieses Verfahren von anderen Verfahren, wie z.B. einer Hydrosilylierung von α,ω-ungesättigten Polymeren mit SiH-funktionellen Silanen, signifikant unterscheidet.

Diese weitgehend vollständige Terminierung führt überraschenderweise zu deutlich besseren Eigenschaften, insbesondere zu deutlich besseren Reißfestigkeiten der die Polymere (A) enthaltenden Massen (M) im Vergleich zu Polymeren deren Endgruppen auf anderem Wege, z.B. über Hydrosilylierung, hergestellt worden sind.

Bei den silanterminierten Polymeren (A) handelt es sich bevorzugt um solche, deren Kettenenden mindestens zu 85%, besonders bevorzugt mindestens zu 90%, insbesondere mindestens zu 95%, mit Endgruppen der Formel (III) terminiert sind. Insbesondere werden als Komponente (A) lineare Polyoxypropylene bevorzugt, deren Ketten mindestens zu 85%, besonders bevorzugt mindestens zu 90%, insbesondere mindestens zu 95%, mit Endgruppen der Formel (III) terminiert sind.

Die mittleren Molekulargewichte Mₙ der Verbindungen (A) betragen vorzugsweise mindestens 10 000 g/mol. besonders bevorzugt mindestens 11 000 g/mol. und besonders bevorzugt höchstens 24 000 g/mol. insbesondere höchstens 22 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98% aller an den Rest A gebundenen Silylgruppen identisch sind. Es kann dann aber auch eine Komponente (A) eingesetzt werden, die zumindest zum Teil Verbindungen der Formel (I) enthält, bei denen an einen Rest A unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste A gebundene Silylgruppen vorhanden sind, wobei jedoch sämtliche an jeweils einen Rest A gebundenen Silylgruppen identisch sind.

Falls es sich bei Komponente (A) um verschiedene Arten von Verbindungen der Formel (I) handelt, sind Mischungen, die sowohl Verbindungen (A1) mit Endgruppen der Formel (II) oder (III), bei denen b = 1 und R¹ = H bedeutet und a = 0 oder 1 ist, enthalten, als auch Verbindungen (A2) mit Endgruppen der Formel (II) oder (III), bei denen b = 3 und R¹ = H bedeutet und a = 0 ist, bevorzugt und solche besonders bevorzugt, in denen das Gewichtsverhältnis von (A1) zu (A2) 0,1 bis 10, vorzugsweise 0,2 bis 5, beträgt.

Die erfindungsgemäß eingesetzten Verbindungen (A) sind handelsübliche Produkte oder können nach in der Chemie gängigen Verfahren hergestellt werden. Beispiele für kommerziell erhältliche Verbindungen (A) stellen die Produkte GENIOSIL® STP-E 10, STP-E 15, STP-E 30 oder STP-E 35 der Fa. Wacker Chemie AG dar.

Vorzugsweise enthalten die erfindungsgemäßen Massen (M) Verbindungen (A) in Konzentrationen von höchstens 75 Gew.-%, besonders bevorzugt höchstens 65 Gew.-% und vorzugsweise mindestens 10 Gew.-%, besonders bevorzugt mindestens 15 Gew.-%, jeweils bezogen auf das Gesamtgewicht der Masse (M).

Bei der erfindungsgemäß eingesetzten hochdispersen Kieselsäure (B) handelt es sich um pyrogene, hydrophobe Kieselsäure.

Die BET-Oberflächen der erfindungsgemäß eingesetzten Kieselsäuren (B) liegen vorzugsweise zwischen 35 und 400 m²/g. besonders bevorzugt zwischen 50 und 200 m²/g.

Die mittleren Teilchengrößen der erfindungsgemäß eingesetzten Kieselsäuren (B) liegen vorzugsweise zwischen 1 und 40 µm, besonders bevorzugt zwischen 5 und 25 µm.

Beispiel für Komponente (B) ist hochdisperse pyrogene, hydrophobe Kieselsäure, erhältlich unter den Handelsbezeichnungen HDK® 2000 der Fa. Wacker Chemie AG, D-München.

Die erfindungsgemäß eingesetzten Kieselsäuren (B) sind handelsübliche Produkte oder können nach in der Chemie gängigen Verfahren hergestellt werden.

Die erfindungsgemäß eingesetzten Kieselsäuren (B) haben einen Feuchtigkeitsgehalt von bevorzugt unter 1 Gew.-%, besonders bevorzugt von unter 0,5 Gew.-%.

In einer bevorzugten Ausführung der Erfindung enthalten die erfindungsgemäßen Massen (M) die hochdisperse Kieselsäure (B) in Konzentrationen von mindestens 19 Gew.-%, besonders bevorzugt von mindestens 24 Gew.-%, jeweils bezogen auf das Gesamtgewicht der Masse (M). Vorzugsweise enthalten die erfindungsgemäßen Massen (M) die hochdisperse Kieselsäure (B) in Mengen von maximal 40 Gew.-%, besonders bevorzugt in Mengen von höchstens 35 Gew.-%, jeweils bezogen auf das Gesamtgewicht der Masse (M).

Die erfindungsgemäßen Massen können neben den Polymeren (A), der hochdispersen Kieselsäure (B) und basischen Stickstoff aufweisende Organosiliciumverbindung (D) noch weitere Komponenten enthalten, wie z.B. nicht reaktive Weichmacher (C), weitere Füllstoffe (E), Siliconharze (F), Katalysatoren (G), Haftvermittler (H), Wasserfänger (I), Additive (J) und Zuschlagstoffe (K).

In einer weiteren bevorzugten Ausführung der Erfindung enthalten die erfindungsgemäßen Massen (M) neben den Polymeren (A) und der Kieselsäure (B), welche in der Masse (M) in einer Menge von mindestens 19 Gew.-%, besonders bevorzugt von mindestens 24 Gew.-%, enthalten ist, auch noch mindestens einen nicht reaktiven Weichmacher (C), wobei alle Gew.-%-Angaben auf das Gesamtgewicht der Masse (M) bezogen sind.

Die erfindungsgemäßen Massen (M) enthalten Weichmacher (C) in Konzentrationen von bevorzugt mindestens 5 Gew.-%, besonders bevorzugt von mindestens 10 Gew.-%, jeweils bezogen auf das Gesamtgewicht der Masse (M). Vorzugsweise enthalten die erfindungsgemäßen Massen (M) den Weichmacher (C) in Mengen von maximal 50 Gew.-% besonders bevorzugt in Mengen von höchstens 40 Gew.-%, insbesondere von höchstens 30 Gew.-%, jeweils bezogen auf das Gesamtgewicht der Masse (M).

Dieser bevorzugten Ausführung der Erfindung liegt die äußerst überraschende Entdeckung zugrunde, dass ein Weichmacherzusatz in den als bevorzugt bzw. besonders bevorzugt angegebenen Mengen, die Zug-Scherfestigkeit der ausgehärteten Massen (M) nicht, wie zu erwarten gewesen wäre, negativ sondern sogar positiv beeinflusst.

Bevorzugt handelt es sich bei Weichmacher (C) um Phthalsäureester, Adipinsäureester, Benzoesäureester, Glycolester, Ester gesättigter Alkandiole, Phosphorsäureester, Sulfonsäureester, Polyester, Polyether, Polystyrole, Polybutadiene, Polyisobutylene, paraffinische Kohlenwasserstoffe und hochmolekulare, verzweigte Kohlenwasserstoffe.

Beispiele für erfindungsgemäß gegebenenfalls eingesetzte Weichmacher (C) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester Adipinsäureester, wie z.B. Dioctyladipat; Benzoesäureester; Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate; Phosphorsäureester; Sulfonsäureester; Polyester; Polyether, wie z.B. Polyethylenglycole, Poly-THF und Polypropylenglycole mit Molmassen von vorzugsweise 200 bis 22 000 g/mol; Polystyrole; Polybutadiene; Polyisobutylene; paraffinische Kohlenwasserstoffe und hochmolekulare, verzweigte Kohlenwasserstoffe.

Bevorzugt werden Weichmacher (C) mit Molmassen, bzw. im Falle polymerer Weichmacher mittlerer Molmassen Mₙ, von größer 200 g/mol. besonders bevorzugt von größer 500 g/mol, insbesondere von größer 900 g/mol, eingesetzt. Vorzugsweise besitzen sie Molmassen bzw. mittlere Molmassen Mn von weniger maximal 20 000 g/mol. besonders bevorzugt von maximal 10.000 g/mol. insbesondere höchstens 8.000 g/mol.

Besonders bevorzugt handelt es sich bei Weichmacher(C) um Polyether, insbesondere um Polyethylenglycole, Poly-THF und Polypropylenglycole, ganz besonders bevorzugt um Polypropylenglycole. Die bevorzugten Polyether (C) weisen dabei Molmassen vorzugsweise zwischen 400 und 22 000 g/mol. besonders bevorzugt zwischen 800 und 12 000 g/mol. insbesondere zwischen 1 000 und 8 000 g/mol. auf.

Die erfindungsgemäßen Massen (M) enthalten basischen Stickstoff aufweisende Organosiliciumverbindung (D) enthaltend Einheiten der Formel

D_{c}Si(OR³)_{d}R⁴ₑO_{(4-c-d-e)/2} (V),

worin
- R³: gleich oder verschieden sein kann und Wasserstoffatom oder gegebenenfalls substituierte Kohlenwasserstoffreste bedeutet,
- D: gleich oder verschieden sein kann und einen einwertigen, SiC-gebundenen Rest mit basischem Stickstoff bedeutet,
- R⁴: gleich oder verschieden sein kann und einen einwertigen, gegebenenfalls substituierten SiC-gebundenen, von basischem Stickstoff freien organischen Rest bedeutet,
- c: 0, 1, 2, 3 oder 4, bevorzugt 1, ist,
- d: 0, 1, 2 oder 3, bevorzugt 1, 2 oder 3, besonders bevorzugt 2 oder 3, ist und
- e: 0, 1, 2 oder 3, bevorzugt 1 oder 0, ist,
mit der Maßgabe, dass die Summe aus c+d+e kleiner oder gleich 4 ist und pro Molekül mindestens ein Rest D anwesend ist.

Bei den erfindungsgemäß eingesetzten Organosiliciumverbindungen (D) kann es sich sowohl um Silane handeln, d.h. Verbindungen der Formel (V) mit c+d+e=4, als auch um Siloxane, d.h. Verbindungen enthaltend Einheiten der Formel (V) mit c+d+e≤3, wobei es sich bevorzugt um Silane handelt.

Beispiele für gegebenenfalls substituierte Kohlenwasserstoffreste R³ sind die für Rest R angegebenen Beispiele.

Bei den Resten R³ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R⁴ sind die für R angegebenen Beispiele.

Bei Rest R⁴ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)s-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-(C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄h₉NH(CH₂)-, C₅H₁₁NH(CH₂)-, C₆h₁₃NH(CH₂)-, C₇H₁₅NH(CH₂)-, cyclo-C₅H₉NH(CH₂)-, cyclo-C₆H₁₁NH(CH₂)-, Phenyl-NH(CH₂-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-(C₆H₁₃)₂NH(CH₂)-, (C₇H₁₅)₂NH(CH₂)-, (CH₃O)₃Si(CH₂)₃NH(CH₂)-, (C₂H₅O)₃Si(CH₂)₃NH(CH₂)₃-, (CH₃O)₂(CH₃)Si(CH₂)₃(CH₂)₃-und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH (CH₂)₃-Rest.

Beispiele für die erfindungsgemäß gegebenenfalls eingesetzten Silane der Formel (v) sind H₂N(CH₂)₃-Si(OCH₃)₃, H₂N(CH₂)₃-Si(OC₂H₅)₃, H₂N(CH₂)₃-Si (OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, Cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₃)₃-Si(OCH₃)₃CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß eingesetzten Organosiliciumverbindungen (D) können in den erfindungsgemäßen Massen (M) auch die Funktion eines Härtungskatalysators oder -cokatalysators übernehmen.

Des Weiteren können die erfindungsgemäß eingesetzten Organosiliciumverbindungen (D) als Haftvermittler und/oder als Wasserfänger wirken.

Die erfindungsgemäß eingesetzten Organosiliciumverbindungen (D) sind handelsübliche Produkte bzw. nach in der Chemie gängigen Verfahren herstellbar.

Die erfindungsgemäßen Massen (M) enthalten Komponente (D) in Mengen von bevorzugt 0,01 bis 25 Gewichtsteilen, besonders bevorzugt 0,1 bis 10 Gewichtsteilen, insbesondere 0,5 bis 5 Gewichtsteilen, jeweils bezogen auf 100 Gewichtsteile Mischung (A).

Bei den in den erfindungsgemäßen Massen (M) gegebenenfalls eingesetzten Füllstoffen (E) kann es sich um beliebige, bisher bekannte Füllstoffe handeln, die unterschiedlich sind zu Komponente (B).

Beispiele für Füllstoffe (E) sind nicht verstärkende Füllstoffe, also Füllstoffe mit einer BET-Oberfläche von vorzugsweise bis zu 50 m²/g. wie Quarz, Diatomeenerde, Calciumsilikat, Zirkoniumsilikat, Talkum, Kaolin, Zeolithe, Metalloxidpulver, wie Aluminium-, Titan-, Eisen-oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g. wie gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL® bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Falls die erfindungsgemäßen Massen (M) Füllstoffe (E) enthalten, handelt es sich bei diesen vorzugsweise um Calciumcarbonat, Talkum, Aluminiumtrihydroxid.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen (M) Füllstoffe (E) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A). Die erfindungsgemäßen Massen (M) enthalten bevorzugt keine Füllstoffe (E).

Die erfindungsgemäßen Massen (M) sind vorzugsweise weitgehend transparent.

Bei den in den erfindungsgemäßen Massen (M) gegebenenfalls eingesetzten Siliconharzen (F) handelt es sich vorzugsweise um Verbindungen, die unterschiedlich sind zu Komponenten (A) und (D), enthaltend Einheiten der Formel

R⁵_{f}(R⁶O)_{g}SiO_{(4-f-g)/2} (VI),

wobei
- R⁵: gleich oder verschieden sein kann und Wasserstoffatom oder einen einwertigen, SiC-gebundenen, gegebenenfalls substituierten Kohlenwasserstoffrest bedeutet,
- R⁶: gleich oder verschieden sein kann und Wasserstoffatom oder einen einwertigen, gegebenenfalls substituierten Kohlenwasserstoffrest bedeutet,
- f: 0, 1, 2 oder 3 ist und
- g: 0, 1, 2 oder 3, bevorzugt 0, 1 oder 2, besonders bevorzugt 0 oder 1, ist,
mit der Maßgabe, dass die Summe aus f+g kleiner oder gleich 3 ist und in mindestens 50 %, bevorzugt mindestens 60 %, der Einheiten der Formel (VI) f gleich 0 oder 1 ist.

Komponente (F) besteht vorzugsweise zu mindestens 90 Gew.-% aus Einheiten der Formel (VI). Besonders bevorzugt besteht Komponente (F) ausschließlich aus Einheiten der Formel (VI).

Beispiele für Reste R⁵ sind die oben für R angegebenen Beispiele.

Bevorzugt handelt es sich bei Rest R⁵ um gegebenenfalls mit Halogenatomen substituierte, einwertige SiC-gebundene aliphatische oder aromatische Kohlenwasserstoffreste mit 1 bis 18 Kohlenstoffatomen, besonders bevorzugt um den Methyl- oder Phenylrest. Vorzugsweise weisen mindestens 40 %, bevorzugt mindestens 50 % der Einheiten der Formel (VI) einen Rest R⁵ auf, bei dem es sich um einen Phenylrest handelt.

Beispiele für Rest R⁶ sind Wasserstoffatom oder die für Rest R angegebenen Beispiele. Bevorzugt handelt es sich bei Rest R⁶ um Wasserstoffatom oder gegebenenfalls mit Halogenatomen substituierte Alkylreste mit 1 bis 10 Kohlenstoffatomen, besonders bevorzugt um den Methyl- und Ethylrest.

Beispiele für als Komponenten (F) einsetzbare Siliconharze sind Organopolysiloxanharze, die im Wesentlichen, vorzugsweise ausschließlich, aus (Q)-Einheiten der Formeln SiO_{4/2}, Si(OR⁶)O_{3/2}, Si(OR⁶)₂O_{2/2} und Si(OR⁶)₃O_{1/2}, (T) -Einheiten der Formeln PhSiO_{3/2}, PhSi(OR⁶)O_{2/2} und PhSi(OR⁶)₂O_{1/2}, (D)-Einheiten der Formeln Me₂SiO_{2/2} und Me₂Si(OR⁶)O_{1/2} sowie (M)-Einheiten der Formel Me₃SiO_{1/2} bestehen, wobei Me für einen Methylrest, Ph für einen Phenylrest und R⁶ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für als Komponenten (F) einsetzbare Siliconharze sind Organopolysiloxanharze, die im Wesentlichen, vorzugsweise ausschließlich, aus T-Einheiten der Formeln PhSiO_{3/2}, PhSi(OR⁶)_{2/2} und PhSi(OR⁶)₂O_{1/2}, gegebenenfalls T-Einheiten der Formeln MeSiO_{3/2}, MeSi(OR⁶)O_{2/2} und MeSi(OR⁶)₂O_{1/2} sowie gegebenenfalls D-Einheiten der Formeln Me₂SiO_{2/2} und Me₂Si(OR⁶)O_{1/2} bestehen, wobei Me für einen Methylrest, Ph für einen Phenylrest und R⁶ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von Phenylsilicon- zu Methylsilicon-Einheiten von 0,5 bis 2,0. Der Gehalt an D-Einheiten in diesen Siliconharzen liegt vorzugsweise unter 10 Gew.-%.

Weitere bevorzugte Beispiele für als Komponenten (F) einsetzbare Siliconharze sind Organopolysiloxanharze, die im Wesentlichen, vorzugsweise ausschließlich, aus T-Einheiten der Formeln PhSiO_{3/2}, PhSi(OR⁶)O_{2/2} und PhSi (OR⁶)₂O_{1/2} bestehen, wobei Ph für einen Phenylrest und R⁶ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht.

Vorzugsweise besitzen die als Komponenten (F) einsetzbare Siliconharze eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol. besonders bevorzugt bei höchstens 100 000 g/mol. insbesondere bei höchstens 50 000 g/mol. Sie können bei 23°C und 1000 hPa sowohl fest als auch flüssig sein, wobei flüssige Siliconharze bevorzugt werden.

Die als Komponenten (F) einsetzbare Siliconharze sind handelsübliche Produkte, z.B. um verschiedene SILRES®-Typen der Fa. Wacker Chemie AG, wie SILRES® IC 368, SILRES® IC 678 oder SILRES®SY231, bzw. nach in der Chemie gängigen Verfahren herstellbar.

Falls die erfindungsgemäßen Massen (M) Siliconharze (F) enthalten, handelt es sich um Mengen von vorzugsweise 5 bis 1000 Gewichtsteilen, besonders bevorzugt von 10 bis 500 Gewichtsteilen, insbesondere von mindestens 50 bis 300 Gewichtsteilen, jeweils bezogen auf 100 Gewichtsteile der Komponente (A).

Bei den in den erfindungsgemäßen Massen (M) gegebenenfalls eingesetzten Katalysatoren (G) kann es sich um beliebige, bisher bekannte Katalysatoren für durch Silankondensation härtende Massen handeln, die unterschiedlich sind zu Komponente (D).

Beispiele für metallhaltige Härtungskatalysatoren (G) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (G) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (G) können saure Verbindungen eingesetzt werden, wie Phosphorsäure and ihre Ester, Toluolsulfonsäure, Schwefelsäure, Salpetersäure oder auch organische Carbonsäuren, z.B. Essigsäure und Benzoesäure.

In einer Ausführung der Erfindung handelt es sich bei den gegebenenfalls eingesetzten Katalysatoren (G) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90% Gew.-%, vorzugsweise zu mindestens 95 Gew.-%, aus Verbindungen der Formel (I) besteht, in denen b ungleich 1 ist.

Falls die erfindungsgemäßen Massen (M) Katalysatoren (G) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

Bei den in den erfindungsgemäßen Massen (M) gegebenenfalls eingesetzten Haftvermittlern (H) kann es sich um beliebige, bisher für durch Silankondensation härtende Systeme beschriebene Haftvermittler handeln.

Bevorzugt handelt es sich bei den Haftvermittlern (H) um Alkoxysilane mit mindestens einer SiC-gebundenen, reaktiven organischen Funktion, wie z.B. Glycidoxyalkyl-, Carbamatoalkyl- und Methacryloxyalkyl-alkoxysilane, und deren Teilhydrolysate, die unterschiedlich sind zu Komponente (D).

Beispiele für Haftvermittler (H) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylproy-pl)-maleinsäureanhydrid, N-(3-Trimethoxysilylpropyl)-hamstoff, N-(3-Triethoxysilylpropyl)-harnstoff, N-(Trimethoxysilylmethyl)-hamstoff, N-(Methyldimethoxysilylmethyl)-hamstoff, N-(3-Triethoxysilytmathyl)-hamstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen (M) Haftvermittler (H) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der Komponente (A).

Bei den in den erfindungsgemäßen Massen (M) gegebenenfalls eingesetzten Wasserfängern (I) kann es sich um beliebige, für durch Silankondensation härtende Systeme beschriebene Wasserfänger handeln.

Bevorzugt handelt es sich bei den Wasserfängern (I) um Alkoxysilane und deren Teilhydrolysate, die unterschiedlich sind zu Komponenten (D) und (H).

Beispiele für Wasserfänger (I) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan. Falls die erfindungsgemäßen Massen (M) Wasserfänger (I) enthalten, handelt es sich um Mengen von vorzugsweise 0,5 bis 30 Gewichtsteilen, besonders bevorzugt 1 bis 20 Gewichtsteilen, jeweils bezogen auf 100 Gewichtsteile der Komponente (A). Die erfindungsgemäßen Massen enthalten bevorzugt Komponente (I).

Bei den in den erfindungsgemäßen Massen (M) gegebenenfalls eingesetzten Additiven (J) kann es sich um beliebige, bisher bekannte für silanvernetzende Systeme typische Additive handeln.

Bei den erfindungsgemäß gegebenenfalls eingesetzten Additiven (J) handelt es sich bevorzugt um Antioxidantien, UV-Stabilisatoren, wie z.B. sog. HALS-Verbindungen, Fungizide und Pigmente.

Falls die erfindungsgemäßen Massen (M) Additive (J) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile der Komponente (A).

Bei den erfindungsgemäß gegebenenfalls eingesetzten Zuschlagsstoffen (K) handelt es sich bevorzugt um Tetraalkoxysilane, wie z.B. Tetraethoxysilan, und/oder deren Teilkondensate, Reaktivweichmacher, Rheologieadditive, Flammschutzmittel und organische Lösungsmittel.

Bevorzugte Reaktivweichmacher (K) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilane, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (K) handelt es sich bevorzugt um Polyamidwachse, hydrierte Rizinusöle oder Stearate.

Beispiele für organische Lösungsmittel (K) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmitteln zugesetzt.

Falls die erfindungsgemäßen Massen (M) eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile der Komponente (A).

Sämtliche inhaltstoffe der Massen (M) addieren sich stets auf 100 Gew.-%.

Bei den erfindungsgemäßen Massen handelt es sich bevorzugt um solche enthaltend
(A) Verbindungen der Formel (I),
(B) hochdisperse, pyrogene, hydrophobe Kieselsäure, gegebenenfalls
(C) nicht reaktiven Weichmacher,
(D) basischen Stickstoff aufweisende Verbindung, gegebenenfalls
(E) Füllstoffe,
   gegebenenfalls
(F) Katalysatoren,
   gegebenenfalls
(H) Haftvermittler,
   gegebenenfalls
(I) Wasserfänger,
   gegebenenfalls
(J) Additive und
   gegebenenfalls
(K) Zuschlagstoffe.

Bei den erfindungsgemäßen Massen handelt es sich besonders bevorzugt um solche enthaltend
(A) Verbindungen der Formel (I),
(B) hochdisperse, pyrogene, hydrophobe Kieselsäure,
(C) nicht reaktiven Weichmacher,
(D) basischen Stickstoff aufweisende Verbindung,
   gegebenenfalls
(E) Füllstoffe,
   gegebenenfalls
(F) Katalysatoren,
   gegebenenfalls
(H) Haftvermittler,
   gegebenenfalls
(I) Wasserfänger,
   gegebenenfalls
(J) Additive und
   gegebenenfalls
(K) Zuschlagstoffe.

Die erfindungsgemäßen Massen (M) enthalten außer den Komponenten (A) bis (K) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen (M) handelt es sich bevorzugt um Kleb- oder Dichtstoff, besonders bevorzugt um Klebstoffe.

Die erfindungsgemäßen Massen (M) weisen Viskositäten von bevorzugt 500 bis 1 000 000 mPas, besonders bevorzugt von 1 000 bis 500 000 mPas, auf, jeweils bei 25°C.

Die Herstellung der erfindungsgemäßen Massen (M) kann nach beliebiger und an sich bekannter Art und Weise erfolgen, wie etwa nach Methoden und Mischverfahren, wie sie zur Herstellung von feuchtigkeitshärtenden Zusammensetzungen üblich sind.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen (M) handelt es sich bevorzugt um einkomponentige, unter Ausschluss von Wasser lagerfähige, bei Zutritt von Wasser bei Raumtemperatur vernetzbare Massen. Die erfindungsgemäßen Massen (M) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (M) reicht der übliche Wassergehalt der Luft aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft über- oder unterschreitenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Massen (M).

Bei den erfindungsgemäßen Formkörpern kann es sich um beliebige Formkörper handeln, wie etwa Dichtungen, Preßartikel, extrudierte Profile, Beschichtungen, Imprägnierungen, Verguss, Linsen, Prismen, polygone Strukturen, Laminat- oder Klebschichten.

Die erfindungsgemäßen Massen (M) weisen nach dem Aushärten Reißfestigkeiten >5 MPa, bevorzugt >7 MPa, besonders bevorzugt >8 MPa, auf.

Die erfindungsgemäßen Massen (M) weisen im ausgehärteten Zustand Bruchdehnungen von bevorzugt: >100%, besonders bevorzugt >150%, insbesondere >200%, auf.

Bevorzugt zeigen die erfindungsgemäßen Massen (M) im ausgehärteten Zustand Reißfestigkeiten >5 MPa in Kombination mit Bruchdehnungen >100%, besonders bevorzugt Reißfestigkeiten >5 MPa in Kombination mit Bruchdehnungen >150%, insbesondere mit Bruchdehnungen >200%.

Ein weiterer Gegenstand der Erfindung ist ein Verfahren zur Verklebung von Substraten, bei denen die erfindungsgemäße Masse auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt werden können, sind insbesondere Holz aber auch Kunststoffe inkl. PVC, Beton, mineralische Untergründe, Metalle, Glas, Keramik und lackierte Oberflächen. Dabei können : sowohl gleiche als auch unterschiedliche Materialen miteinander verklebt werden. Ein Beispiel für eine bevorzugte Anwendung der erfindungsgemäßen Klebstoffe ist die Verklebung von Fügeteilen, die einerstarken Vibration unterliegen können, z.B. die Verklebung von Windschutzscheiben.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird. Beispiele hierfür sind Beschichtungen, Verguss, z.B. Vergussmassen für LEDs oder sonstige elektronische Bauteile, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen (M) und mindestens einem Substrat so zusammengesetzt ist, dass zwischen den beiden Teilen eine feste, dauerhafte Verbindung besteht.

Die erfindungsgemäßen Massen (M) haben den Vorteil, dass sie aus leicht und aus kommerziell problemlos zugänglichen sowie preisgünstigen Materialien, insbesondere aus kommerziell verfügbaren silanvernetzenden Polymeren, z.B. den verschiedenen GENIOSIL® STP-E-Typen der Fa. Wacker Chemie AG, herzustellen sind.

Die erfindungsgemäßen vemetzbaren Massen (M) haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen (M) den Vorteil, dass sie ein ausgezeichnetes Haftungsprofil aufweisen.

Des Weiteren haben die erfindungsgemäßen Massen (M) den Vorteil, dass leicht zu verarbeiten sind.

Des Weiteren haben die erfindungsgemäßen vernetzbaren Massen (M) den Vorteil, dass daraus Klebstoffe mit hoher Reißfestigkeit, und hoher Elastizität, d.h. hoher Bruchdehnung erhalten werden können.

Die erfindungsgemäßen Massen haben den Vorteil, dass sie es erlauben, die für die Erzielung von hohen Elastizitäten, d.h. Bruchdehnungen >100%, benötigten langkettigen und damit entsprechend hochmolekularen silanvernetzenden Polymere einzusetzen, ohne dass deren Einsatz automatisch zu sehr mäßigen Reißfestigkeiten, d.h. zu Reißfestigkeiten unter 5 MPa, führt. Somit erlauben die erfindungsgemäßen Systeme die Entwicklung von Klebstoffen, die sowohl hochreißfest als auch hochelastisch sind.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

Beispiel 1 zeigt die Abhängigkeit der mechanischen Eigenschaften der ausgehärteten Klebstoffformulierungen, insbesondere die Abhängigkeit von deren Reißfestigkeiten, von dem in der vernetzbaren Masse enthaltenen Anteil an pyrogener Kieselsäure.

### Klebstoffformulierung 1a

111,6 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL®STP-E35 bei der Fa. Wacker Chemie AG) werden in einem Laborplanetenmischer der Fa. PC-Laborsystem, ausgestattet mit zwei Balkenmischern, bei 25°C mit 5,6 g Vinyltrimethoxysilan und 27,4 g eines Polypropylenglycols mit einer mittleren Molmasse (Mₙ) von 2000 g/mol für 2 Minuten bei 200 U/min homogenisiert. Danach werden 50,0 g einer hydrophoben pyrogenen Kieselsäure mit einer BET-Oberfläche von ca. 140 m²/g (HDK® H 2000, käuflich erhältlich bei der der Fa. Wacker Chemie AG) eine Minute unter Rühren bei 600 U/min aufgeschlossen. Schließlich werden 5,0 g N-(2-Aminoethyl)-3-aminopropyl-trimethoxysilan und 0,4 g Dioctylzinndilaurat für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Klebstoffformulierung 1b

Die oben unter Klebstoffformulierung 1 a beschriebene Arbeitsweise wird wiederholt mit der Abänderung, dass 119,6 g des beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 29,4 g eines Polypropylenglycols mit einer mittleren Molmasse (Mₙ) von 2000 g/mol. 40,0 g einer hydrophoben pyrogenen Kieselsäure mit einer BET-Oberfläche von ca. 140 m²/g eine Minute unter Rühren bei 600 U/min, 5,0 g N-(2-Aminoethyl)-3-aminopropyl-trimethoxysilan und 0,4 g Dioctylzinndilaurat eingesetzt werden.

### Vergleichsbeispiel 1 (V1)

### Klebstoffformulierung 1c

Die in Beispiel 1a beschriebene Arbeitsweise wird wiederholt mit der Abänderung, dass 127,6 g des beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 31,4 g eines Polypropylenglycols mit einer mittleren Molmasse (Mₙ) von 2000 g/mol. 30,0 g einer hydrophoben pyrogenen Kieselsäure mit einer BET-Oberfläche von ca. 140 m²/g. 5,0 g N-(2-Aminoethyl)-3-aminopropyl-trimethoxysilan und 0,4 g Dioctylzinndilaurat eingesetzt werden.

### Bestimmung der Eigenschaften der Klebstoffformulierungen 1a, 1b und 1c

Die in den Beispielen 1a bis 1c erhaltenen Massen wurden vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit).gelagert. Während des Aushärtehs wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Spatel mehr kleben, so hat sich eine Haut gebildet und die Zeit wird notiert.

### Mechanische Eigenschaften

Die Massen wurden jeweils auf ausgefrästen Teflonplatten mit 2 mm Tiefe ausgestrichen und 2 Wochen bei 23°C, 50% rel. Luftfeuchte gehärtet.

Reißfestigkeit wird gemäß DIN 53504-S1 bestimmt.

Reißdehnung wird gemäß DIN 53504-S1 bestimmt.

Shorehärte A wird gemäß DIN 53505 bestimmt.

Die Ergebnisse finden sich in Tabelle 1.

**Tabelle 1:**

| Beispiel | 1 | | V1 |
|---|---|---|---|
| Klebstoffformulierung | 1a | 1b | 1c |
| Gehalt pyrogene Kieselsäure [Gew.-%] | 25 | 20 | 15 |
| Hautbildungszeit [min] | 13 | 20 | 23 |
| Reißfestigkeit [MPa] | 8,2 | 6,5 | 3,5 |
| Reißdehnung [%] | 304 | 306 | 249 |
| Shorehärte A | 65 | 60 | 54 |

### Beispiel 2

Beispiel 2 zeigt die Abhängigkeit der mechanischen Eigenschaften der ausgehärteten Klebstoffformulierungen von dem in der vernetzbaren Masse enthaltenen Anteil eines Weichmachers.

### Klebstoffformulierung 2a

66,0 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL®STP-E35 beider Fa. Wacker Chemie AG) werden in einem Laborplanetenmischer der Fa. PC-Laborsystem, ausgestattet mit zwei Balkenmischern, bei 25°C mit 5,6 g Vinyltrimethoxysilan und 66,0 g eines Polypropylenglycols mit einer mittleren Molmasse (Mₙ) von 2000 g/mol für 2 Minuten bei 200 U/min homogenisiert. Danach werden 57,0 g einer hydrophoben pyrogenen Kieselsäure mit einer BET-Oberfläche von ca. 140 m²/g (HDK® H 2000, käuflich erhältlich bei der der Fa. Wacker Chemie AG) eine Minute unter Rühren bei 600 U/min aufgeschlossen. Schließlich werden 5,0 g N-(2-Aminoethyl)-3-aminopropyl-trimethoxysilan und 0,4 g Dioctylzinndilaurat für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Klebstoffformulierung 2b

Die oben unter 2a beschriebene Arbeitsweise wird wiederholt mit der Abänderung, dass 86,0 g des beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 46,0 g eines Polypropylenglycols mit einer mittleren Molmasse (Mₙ) von 2000 g/mol. 57,0 g einer hydrophoben pyrogenen Kieselsäure mit einer BET-Oberfläche von ca. 140 m²/g. 5,0 g N-(2-Aminoethyl)-3-aminopropyl-trimethoxysilan und 0,4 g Dioctylzinndilaurat eingesetzt werden.

### Klebstoffformulierung 2c

Die oben unter 2a beschriebene Arbeitsweise wird wiederholt mit der Abänderung, dass 106,0 g des beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 26,0 g eines Polypropylenglycols mit einer mittleren Molmasse (Mₙ) von 2000 g/mol. 57,0 g einer hydrophoben pyrogenen Kieselsäure mit einer BET-Oberfläche von ca. 140 m²/g. 5,0 g N-(2-Aminoethyl)-3-aminopropyl-trimethoxysilan und 0,4 g Dioctylzinndilaurat eingesetzt werden.

### Klebstoffformulierung 2d

Die oben unter 2a beschriebene Arbeitsweise wird wiederholt mit der Abänderung, dass 126,0 g des beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 57,0 g einer hydrophoben pyrogenen Kieselsäure mit einer BET-Oberfläche von ca. 140 m²/g. 5,0 g N-(2-Aminoethyl)-3-aminopropyl-trimethoxysilan und 0,4 g Dioctylzinndilaurat eingesetzt werden. Auf den Zusatz eines Polypropylenglycols als Weichmacher wird in dieser Klebstoffformulierung verzichtet.

### Bestimmung der Eigenschaften der Klebstoffformulierungen 2a, 2b, 2c und 2d

Die Bestimmung von Hautbildungszeit und mechanischen Eigenschaften erfolgt ebenso wie in Beispiel 1 beschrieben. Die Ergebnisse finden sich in Tabelle 2.

**Tabelle 2:**

| Beispiel | 2 | | | |
|---|---|---|---|---|
| Klebstoffformulierung | 2a | 2b | 2c | 2d |
| Gehalt Weichmacher [Gew.-%] | 33 | 23 | 13 | 0 |
| Hautbildungszeit [min] | 19 | 18 | 17 | 17 |
| Reißfestigkeit [MPa] | 6,3 | 8,4 | 9,9 | 7,8 |
| Reißdehnung [%] | 355 | 325 | 304 | 201 |
| Shorehärte A | 57 | 64 | 67 | 73 |

### Beispiel 3

Beispiel 3 beschreibt Klebstoffformulierungen mit unterschiedlichen Prepolymeren.

### Klebstoffformulierung 3a

66,0 g eines beidseitig silanterminierten linearen Polypropylenglycols mit einer mittleren Molmasse (Mₙ) von 12000 g/mol und Endgruppen der Formel -O-C(=O)-NH-(CH₂)₃-Si(OCH₃)₃ (käuflich erhältlich unter der Bezeichnung GENIOSIL® STP-E15 bei der Fa. Wacker Chemie AG) werden in einem Laborplanetenmischer der Fa. PC-Laborsystem, ausgestattet mit zwei Balkenmischern, bei 25°C mit 5,6 g Vinyltrimethoxysilan und 66,0 g eines Polypropylenglycols mit einer mittleren Molmasse (Mₙ) von 2000 g/mol für 2 Minuten bei 200 U/min homogenisiert. Danach werden 57,0 g einer hydrophoben pyrogenen Kieselsäure mit einer BET-Oberfläche von ca. 140 m²/g (HDK® H 2000, käuflich erhältlich bei der der Fa. Wacker Chemie AG) eine Minute unter Rühren bei 600 U/min aufgeschlossen. Schließlich werden 5,0 g N-(2-Aminoethyl)-3-aminopropyl-trimethoxysilan und 0,4 g Dioctylzinndilaurat für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 25°C vor der Untersuchung gelagert.

### Klebstoffformulierung 3b

Die oben unter 3a beschriebene Arbeitsweise wird wiederholt mit der Abänderung, dass 106,0 g eines beidseitig silanterminierten linearen Polypropylenglycols mit einer mittleren Molmasse (Mₙ) von 18000 g/mol und Endgruppen der Formel -O-C(=O)-NH-CH₂-Si(OCH₃)₃ (käuflich erhältlich unter der Bezeichnung GENIOSIL® STP-E30 bei der Fa. Wacker Chemie AG), 6,0 g Vinyltrimethoxysilan, 26,0 g eines Polypropylenglycols mit einer mittleren Molmasse (Mₙ) von 2000 g/mol.57,0 g einer hydrophoben pyrogenen Kieselsäure mit einer BET-Oberfläche von ca. 140 m²/g und 5,0 g N-(2-Aminoethyl)-3-aminopropyl-trimethoxysilan eingesetzt werden. Auf den Zusatz eines weiteren Katalysators kann in dieser, auf einem sogenannten α-silanterminierten Polymer beruhenden Formulierung verzichtet werden.

### Bestimmung der Eigenschaften der Klebstoffformulierungen 3a und 3b

Die Bestimmung von Hautbildungszeit und mechanischen Eigenschaften erfolgt ebenso wie in Beispiel 1 beschrieben. Die Ergebnisse finden sich in

**Tabelle 3:**

| Beispiel | 3 | |
|---|---|---|
| Klebstoffformulierung | 3a | 3b |
| Prepolymertyp | GENIOSIL® STP-E15 | GENIOSIL® STP-E30 |
| Hautbildungszeit [min] | 21 | 6 |
| Reißfestigkeit [MPa] | 5,9 | 7,2 |
| Reißdehnung [%] | 214 | 313 |
| Shorehärte A | 55 | 63 |

### Vergleichsbeispiel 4 (V4)

Vergleichsbeispiel 4 beschreibt Klebstoffformulierungen, die verschiedene Kieselsäuretypen enthalten.

### Klebstoffformulierung 4a

103,0 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL®STP-E35 bei der Fa. Wacker Chemie AG) werden in einem Laborplanetenmischer der Fa. PC-Laborsystem, ausgestaltet mit zwei Balkenmischern, bei 25°C mit 3,0 g Vinyltrimethoxysilan und 23,0 g eines Polypropylenglycols mit einer mittleren Molmasse (Mₙ) von 2000 g/mol für 2 Minuten bei 200 U/min homogenisiert. Danach werden 65,6 g einer hydrophilen pyrogenen Kieselsäure mit einer BET-Oberfläche von ca. 50 m²/g (HDK® D 05, käuflich erhältlich bei der der Fa. Wacker Chemie AG) eine Minute unter Rühren bei 600 U/min aufgeschlossen. Schließlich werden 5,0 g N-(2-Aminoethyl)-3-aminopropyl-trimethoxysilan und 0,4 g Dioctylzinndilaurat für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 25°C vor der Untersuchung gelagert.

### Klebstoffformulierung 4b

Die oben unter 4a beschriebene Arbeitsweise wird wiederholt mit der Abänderung, dass 113,0 g eines beidseitig silanterminierten linearen Polypropylenglycols mit einer mittleren Molmasse (Mₙ) von 18000 g/mol und Endgruppen der Formel -O-C(=O)-NH-CH₂-Si(OCH₃)₃ (käuflich erhältlich unter der Bezeichnung GENIOSIL®STP-E30 bei der Fa. Wacker Chemie AG), 6,0 g Vinyltrimethoxysilan, 33,0 g eines Polypropylenglycols mit einer mittleren Molmasse (Mₙ) von 2000 g/mol. 43,0 g einer hydrophilen pyrogenen Kieselsäure mit einer BET-Oberfläche von ca. 100 m²/g (HDK® C 10, käuflich erhältlich bei der der Fa. Wacker Chemie AG)und 5,0 g N-(2-Aminoethyl)-3-aminopropyltrimethoxysilan eingesetzt werden. Auf den Zusatz eines weiteren Katalysators kann in dieser auf einem sogenannten α-silanterminierten Polymer beruhenden Formulierung verzichtet werden.

### Bestimmung der Eigenschaften der Klebstofffermulierungen 4a und 4b

Die Bestimmung von Hautbildungszeit und mechanischen Eigenschaften erfolgt ebenso wie in Beispiel 1 beschrieben. Die Ergebnisse finden sich in Tabelle 4.

**Tabelle 4:**

| Vergleichsbeispiel | V4 | |
|---|---|---|
| Klebstofffarmulierung | 4a | 4b |
| Kieselsäuretyp | HDK® D 05 | HDK® C 10 |
| Klebstoffformulierung | 4a | 4b |
| Hautbildungszeit [min] | 115 | 5 |
| Reißfestigkeit [MPa] | 5,0 | 6,1 |
| Reißdehnung [%] | 107 | 352 |
| Shorehärte A | 163 | 50 |

### Beispiel 5

Beispiel 5 zeigt die Auswirkungen weiterer Zusätze auf die mechanischen Eigenschaften der resultierenden Massen nach deren Aushärtung.

### Klebstoffformulierung 5a

104,0 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃ (käuflich erhältlich unter der Bezeichnung GENIOSIL® STP-E35 bei der Fa. Wacker Chemie AG) werden in einem Laborplanetenmischer der Fa. PC-Laborsystem, ausgestattet mit zwei Balkenmischern, bei ca. 25°C mit 4,6 g Vinyltrimethoxysilan, 24,0 g eines Polypropylenglycols mit einer mittleren Molmasse (Mₙ) von 2000 g/mol und 5 g eines lösungsmittelfreien, flüssigen Phenylsiliconharzes, das aus phenylfunktionellen T-Einheiten (50-75 Mol-%) und dimethylfunktionellen D-Einheiten (25-50 Mol-%) zusammengesetzt ist und einen Gehalt an Alkoxygruppen von 10-30 Gew.-% aufweist (käuflich erhältlich unter der Bezeichnung SILRES® SY 231 bei der Wacker Chemie AG) für 2 Minuten bei 200 U/min homogenisiert Danach werden 57,0 g einer hydrophoben pyrogenen Kieselsäure mit einer BET-Oberfläche von ca. 140 m²/g (HDK® H 2000, käuflich erhältlich bei der der Fa. Wacker Chemie AG) eine Minute unter Rühren bei 600 U/min aufgeschlossen. Schließlich werden 5,0 g N-(2-Aminoethyl)-3-aminopropyl-trimethoxysilan und 0,4 g Dioctylzinndilaurat für 1 Minute bei 200 U/min eingemischt. Zuletzt wird für 2 Minuten bei 600 U/min und für 1 Minute bei 200 U/min bei einem Druck von 100 mbar homogenisiert und blasenfrei gerührt.

Die so erhaltene Masse wird in 310 ml PE-Kartuschen abgefüllt und 24 Stunden bei 25°C vorder Untersuchung gelagert.

### Klebstoffformulierung 5b

Die oben unter 5a beschriebene Arbeitsweise wird wiederholt mitderAbänderung, dass 104,0 g eines beidseitig silanterminierten linearen Polypropylenglycols mit einer mittleren Molmasse (Mₙ) von 18000 g/mol und Endgruppen der Formel-O-C(=O)-NH-(CH₂)₃-Si(OCH₃)₃. 4,6 g Vinyltrimethoxysilan, 24,0 g eines Polypropylenglycols mit einer mittleren Molmasse (Mₙ) von 2000 g/mol. 5 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES® IC 368 bei der Wacker Chemie AG), 57,0 g einer hydrophoben pyrogenen Kieselsäure mit einer BET-Oberfläche von ca. 140 m²/g. 5,0 g N-(2-Amlnoethyl)-3-aminopropyl-trimethoxysilan und 0,4 g Dioctylzinndilaurat eingesetzt werden.

### Klebstoffformulierung 5c

Die oben unter 5a beschriebene Arbeitsweise wird wiederholt mit der Abänderung, dass 104,0 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 4,6 g Vinyltrimethoxysilan, 5 g Glycidoxypropyl-trimethoxysilan (käuflich erhältlich unter der Bezeichnung GENIOSIL® GF 80 bei der Fa. Wacker Chemie AG). 24,0 g eines Polypropylenglycols mit einer mittleren Molmasse (Mₙ) von 2000 g/mol. 57,0 g einer hydrophoben pyrogenen Kieselsäure mit einer BET-Oberfläche von ca. 140 m²/g. 5,0 g N-(2-Aminoethyl)-3-aminopropyl-trimethoxysilan und 0,4 g Dioctylzinndilaurat eingesetzt werden.

### Klebstoffformulierung 5d

Die oben unter 5a beschriebene Arbeitsweise wird wiederholt mit der Abänderung, dass 106,0 g eines beidseitig silanterminierten linearen Polypropylenglycols mit einer mittleren Molmasse (Mₙ) von 18000 g/mol und Endgruppen der Formel -O-C(=O)-NH-(CH₂)₃-Si(OCH₃)₃, 5,6 g Vinyltrimethoxysilan, 26,0 g eines Polypropylenglycols mit einer mittleren Molmasse (Mₙ) von 2000 g/mol. 57,0 g einer hydrophoben pyrogenen Kieselsäure mit einer BET-Oberfläche von ca. 140 m²/g. 3,0 g N-(2-Aminoethyl)-3-aminopropyl-trimethoxysilan, 2 g N-Cyclohexylaminomethyl-methyldiethoxysilan (käuflich erhältlich unter der Bezeichnung GENIOSIL® XL 924 bei der Fa. Wacker Chemie AG) und 0,4 g Dioctylzinndilaurat eingesetzt werden.

### Bestimmung der Eigenschaften der Klebstoffformulierungen 5a, 5b, 5c und 5d

Die Bestimmung von Hautbildungszeit und mechanischen Eigenschaften erfolgt ebenso wie in Beispiel 1 beschrieben. Die Ergebnisse finden sich in Tabelle 5.

**Tabelle 5:**

| Beispiel | 5 | | | |
|---|---|---|---|---|
| Klebstoffformulierung | 5a | 5b | 5c | 5d |
| weiterer Zusatz | Phenylsiliconharz | Phenylsiliconharz | Glycidoxysilan | Cyclohexylaminosilan |
| Hautbildungszeit [min] | 12 | 12 | 15 | 16 |
| Reißfestigkeit [MPa] | 11,2 | 9,9 | 5,0 | 11,8 |
| Reißdehnung [%] | 363 | 305 | 106 | 420 |
| Shorehärte A | 71 | 68 | 81 | 64 |
| Zugscherfestigkeit (Alu/Alu) [MPa] | 10 | 11,1 | 6,8 | 7,8 |
| Zugscherfestigkeit (Holz/Holz) [MPa] | 5,1 | 7,4 | 7,4 | 7,3 |

## Patentansprüche

1. Massen (M) enthaltend
(A) silanvernetzende Polymere der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest, ausgewählt aus Polyurethanresten und Polyoxyalkylenresten, bedeutet,
R gleich oder verschieden sein kann und einen einwertigen, gegebenenfalls substituierten Kohlenwasserstoffrest darstellt,
R¹ gleich oder verschieden sein kann Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) hochdisperse, pyrogene, hydrophobe Kieselsäure und
(D) basischen Stickstoff aufweisende organosiliciumverbindung enthaltend Einheiten der Formel
D_{c}Si(OR³)_{d}R⁴ₑO_{(4-c-d-e)/2} (V),
worin
R³ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff bedeutet,
R⁴ gleich oder verschieden sein kann und einen einwertigen, gegebenenfalls substituierten SiC-gebundenen, von basischem Stickstoff freien organischen Rest bedeutet,
c 0, 1, 2, 3 oder 4, bevorzugt 1, ist,
d 0, 1, 2 oder 3, bevorzugt 1, 2 oder 3, besonders bevorzugt 2 oder 3, ist und
e 0, 1, 2 oder 3, bevorzugt 1 oder 0, ist,
mit der Maßgabe, dass die Summe aus c+d+e kleiner oder gleich 4 ist und pro Molekül mindestens ein Rest D anwesend ist,
mit der Maßgabe, dass silanvernetzende Polymere (A) eine mittlere Molmasse Mₙ (Zahlenmittel) von mindestens 8000 g/mol und höchstens 30 000 g/mol aufweisen und dass die Masse (M) hochdisperse Kieselsäure in einer Menge von 16 bis 50 Gew.-%, bezogen auf das Gesamtgewicht der Masse (M), enthält, wobei es sich bei der hochdispersen Kieselsäure um hochdisperse, pyrogene, hydrophobe Kieselsäure handelt.

2. Massen gemäß Anspruch 1, **dadurch gekennzeichnet, dass** es sich bei Komponente (B) um pyrogene Kieselsäure mit einer BET-Oberfläche zwischen 35 und 400 m²/g handelt.

3. Massen gemäß einem oder mehreren der Ansprüche 1 oder 2, **dadurch gekennzeichnet, dass** sie hochdisperse Kieselsäure (B) in Konzentrationen von mindestens 19 Gew.-% und maximal 40 Getv.-%, jeweils bezogen auf das Gesamtgewicht der Masse (M), enthalten.

4. Massen gemäß einem oder mehreren der Ansprüche 1 bis 3, **dadurch gekennzeichnet, dass** sie mindestens einen nicht reaktiven Weichmacher (C) enthalten.

5. Massen gemäß Anspruch 4, **dadurch gekennzeichnet, dass** sie Weichmacher (C) in Konzentrationen von mindestens 5 Gew.-% und maximal 50 Gew.-%, bezogen auf das Gesamtgewicht der Masse (M), enthalten.

6. Massen gemäß einem oder mehreren der Ansprüche 1 bis 5, **dadurch gekennzeichnet, dass** es sich um solche enthaltend
(A) Verbindungen der Formel (I),
(B) hochdisperse, pyrogene, hydrophobe Kieselsäure,
(C) nicht reaktiven Weichmacher,
(D) basischen Stickstoff aufweisende Verbindung enthaltend Einheiten der Formel (V),
gegebenenfalls
(E) Füllstoffe,
gegebenenfalls
(F) Katalysatoren,
gegebenenfalls
(H) Haftvermittler,
gegebenenfalls
(I) Wasserfänger,
gegebenenfalls
(J) Additive und
gegebenenfalls
(K) Zuschlagstoffe,
handelt.

7. Verfahren zur Herstellung der Massen gemäß einem oder mehreren der Ansprüche 1 bis 6 durch Mischen der einzelnen Komponenten in beliebiger Reihenfolge.

8. Formkörper hergestellt durch Vernetzung der Massen gemäß einem oder mehreren der Ansprüche 1 bis 6 oder hergestellt nach Anspruch 7.

9. Verfahren zur Verklebung von Substraten, bei denen die Masse gemäß einem oder mehreren der Ansprüche 1 bis 6 oder hergestellt nach Anspruch 7 auf die Oberfläche mindestens eines Substrates aufgebracht, diese Oberfläche dann mit dem zu verklebenden zweiten Substrat in Kontakt gebracht und anschließend vernetzen gelassen wird.

10. Verfahren zur Herstellung von Materialverbunden, bei denen die Masse gemäß einem oder mehreren der Ansprüche 1 bis 6 oder hergestellt nach Anspruch 7 auf mindestens ein Substrat aufgebracht und anschließend vernetzen gelassen wird.

## Claims

1. Compositions (M) comprising
(A) silane-crosslinking polymers of the formula
Y-[(CR¹₂)_{b}-SiRₐ(OR²)₃₋ₐ]ₓ (I),
where
Y represents a polymer residue which is x-valent and attached via nitrogen, oxygen, sulfur or carbon, selected from polyurethane residues and polyoxyalkylene residues,
R represents a monovalent, optionally substituted hydrocarbyl radical and may be the same or different in each occurrence,
R¹ represents the hydrogen atom or a monovalent, optionally substituted hydrocarbyl radical which may be attached to the carbon atom via nitrogen, phosphorus, oxygen, sulfur or a carbonyl group and may be the same or different in each occurrence,
R² represents a hydrogen atom or a monovalent, optionally substituted hydrocarbyl radical and may be the same or different in each occurrence,
x represents an integer from 1 to 10,
a represents 0, 1 or 2 and may be the same or different in each occurrence, and
b represents an integer from 1 to 10 and may be the same or different in each occurrence,
(B) finely divided, pyrogenous, hydrophobic silica, and
(D) basic nitrogen organosilicon compound comprising units of the formula
D_{c} Si(OR³)_{d}R⁴ₑO_{(4-c-d-e)}/2 (V),
where
R³ represents a hydrogen atom or optionally substituted hydrocarbyl radicals and may be the same or different in each occurrence,
D represents a monovalent SiC-bonded radical with basic nitrogen and may be the same or different in each occurrence,
R⁴ represents a monovalent, optionally substituted SiC-bonded organic radical free from basic nitrogen and may be the same of different in each occurrence,
c represents 0, 1, 2, 3 or 4, preferably 1,
d represents 0, 1, 2 or 3, preferably 1, 2 or 3, more preferably 2 or 3, and
e represents 0, 1, 2 or 3, preferably 1 or 0,
with the proviso that the sum total of c+d+e is not more than 4 and at least one D radical is present per molecule,
with the proviso that silane-crosslinking polymers (A) have an average molar mass Mₙ (number average) of at least 8000 g/mol and at most 30 000 g/mol and that composition (M) comprises finely divided silica in an amount of 16 to 50 wt%, based on the overall weight of composition (M), wherein the finely divided silica is finely divided, pyrogenous, hydrophobic silica.

2. Compositions according to Claim 1, **characterized in that** component (B) comprises pyrogenous silica having a BET surface area between 35 and 400 m²/g.

3. Compositions according to one or more of Claims 1 to 2, **characterized in that** they comprise finely divided silica (B) in concentrations of at least 19 wt% and at most 40 wt%, both based on the overall weight of composition (M).

4. Compositions according to one or more of Claims 1 to 3, **characterized in that** they comprise at least one nonreactive plasticizer (C).

5. Compositions according to Claim 4, **characterized in that** they comprise plasticizer (C) in concentrations of at least 5 wt% and at most 50 wt%, based on the overall weight of composition (M).

6. Compositions according to one or more of Claims 1 to 5, **characterized in that** they comprise
(A) compounds of formula (I),
(B) finely divided, pyrogenous, hydrophobic silica,
(C) nonreactive plasticizer,
(D) basic nitrogen compound, comprising units of formula (V),
optionally
(E) fillers,
optionally
(F) catalysts,
optionally
(H) adhesion promoters,
optionally
(I) water scavengers,
optionally
(J) additives, and
optionally
(K) admixture agents.

7. Method of forming the compositions according to one or more of Claims 1 to 6 by mixing the individual components in any desired order.

8. Shaped article obtained by crosslinking the compositions according to one or more of Claims 1 to 6 or obtained according to Claim 7.

9. Method of adhesively bonding substrates, which comprises the composition according to one or more of Claims 1 to 6 or obtained according to Claim 7 being applied atop the surface of at least one substrate, this surface then being brought into contact with the second adherend substrate and subsequently being allowed to crosslink.

10. Method of forming composites, which comprises the composition according to one or more of Claims 1 to 6 or obtained according to Claim 7 being applied atop at least one substrate and then being allowed to crosslink.

## Revendications

1. Matières (M) contenant
(A) des polymères réticulant les silanes, de formule
Y-[(CR¹₂)_{b}-SiRₐ(OR²)₃₋ₐ]ₓ (I),
dans laquelle
Y représente un radical polymère x-valent, lié par un atome d'azote, d'oxygène, de soufre ou de carbone, choisis parmi des radicaux polyuréthane et des radicaux polyoxyalkylène,
R peut être le même ou différent et représente un radical hydrocarboné monovalent, éventuellement substitué,
R¹ peut être le même ou différent et représente un atome d'hydrogène ou un radical hydrocarboné monovalent, éventuellement substitué, qui peut être lié à l'atome de carbone par un atome d'azote, de phosphore, d'oxygène, de soufre ou un groupe carbonyle,
R² peut être le même ou différent et représente un atome d'hydrogène ou un radical hydrocarboné monovalent, éventuellement substitué,
x est un nombre entier valant de 1 à 10,
a peut être le même ou différent et est 0, 1 ou 2 et
b peut être le même ou différent et est un nombre entier valant de 1 à 10,
(B) de la silice hautement dispersée, pyrogénée et hydrophobe, et
(D) un composé organosilicié comportant de l'azote basique, qui contient des unités de formule
D_{c}Si(OR³)_{d}R⁴ₑO_{(4-c-d-e)/2} (V),
dans laquelle
R³ peut être le même ou différent et représente un atome d'hydrogène ou des radicaux hydrocarbonés éventuellement substitués,
D peut être le même ou différent et représente un radical monovalent, lié par une liaison SiC à l'atome d'azote basique,
R⁴ peut être le même ou différent et représente un radical organique monovalent, exempt d'azote basique, éventuellement substitué, lié par une liaison SiC,
c est 0, 1, 2, 3 ou 4, de préférence 1,
d est 0, 1, 2 ou 3, de préférence 1, 2 ou 3, de façon particulièrement préférée 2 ou 3, et
e est 0, 1, 2 ou 3, de préférence 1 ou 0,
étant entendu que la somme de c+d+e est inférieure ou égale à 4 et qu'au moins un radical D est présent par molécule,
étant entendu que les polymères (A) réticulant les silanes présentent une masse molaire moyenne Mₙ (moyenne en nombre) d'au moins 8 000 g/mole et d'au maximum 30 000 g/mole et que la matière (M) contient de la silice hautement dispersée en une quantité de 16 à 50 % en poids, par rapport au poids total de la matière (M), il s'agissant, pour ce qui est de la silice hautement dispersée, de silice hautement dispersée, pyrogénée et hydrophobe.

2. Matières selon la revendication 1, **caractérisée en ce que** pour ce qui est du composant (B) il s'agit de silice pyrogénée ayant une surface BET comprise entre 35 et 400 m²/g.

3. Matières selon une ou plusieurs des revendications 1 et 2, **caractérisées en ce qu'**elles contiennent de la silice hautement dispersée (B) à des concentrations d'au moins 19 % en poids et d'au maximum 40 % en poids, chaque fois par rapport au poids total de la matière (M).

4. Matières selon une ou plusieurs des revendications 1 à 3, **caractérisées en ce qu'**elles contiennent au moins un plastifiant non réactif (C).

5. Matières selon la revendication 4, **caractérisées en ce qu'**elles contiennent le plastifiant (C) à des concentrations d'au moins 5 % en poids et d'au maximum 50 % en poids, par rapport au poids total de la matière (M).

6. Matières selon une ou plusieurs des revendications 1 à 5, **caractérisées en ce qu'**il s'agit de celles contenant
(A) des composés de formule (I),
(B) de la silice hautement dispersée, pyrogénée et hydrophobe,
(C) des plastifiants non réactifs,
(D) un composé comportant de l'azote basique, qui contient des unités de formule (V),
éventuellement
(E) des charges,
éventuellement
(F) des catalyseurs,
éventuellement
(H) des agents d'adhérence,
éventuellement
(I) des capteurs d'eau,
éventuellement
(J) des additifs et
éventuellement
(K) des additifs.

7. Procédé pour la production des matières selon une ou plusieurs des revendications 1 à 6, par mélange des composants individuels en un ordre quelconque.

8. Corps moulé, produit par réticulation des matières selon une ou plusieurs des revendications 1 à 6 ou produites selon la revendication 7.

9. Procédé pour le collage de supports, dans lequel on applique la matière selon une ou plusieurs des revendications 1 à 6 ou produite selon la revendication 7 sur la surface d'au moins un support, puis on met cette surface en contact avec le deuxième support à coller et ensuite on laisse réticuler.

10. Procédé pour la production de composites de matériaux, dans lequel on applique sur au moins un support la matière selon une ou plusieurs des revendications 1 à 6 ou produite selon la revendication 7 et ensuite on la laisse réticuler.
